Europäisches Patentamt

European Patent Office

Office européen des brevets

(11) Veröffentlichungsnummer: **0 042 532**

**A1**

(12) **EUROPÄISCHE PATENTANMELDUNG**

(21) Anmeldenummer: **81104426.2**

(22) Anmeldetag: **10.06.81**

(51) Int. Cl.³: **C 01 B 17/79**
**C 01 B 17/77, B 01 J 23/22**
**B 01 J 37/00**

(30) Priorität: **19.06.80 DE 3022894**

(43) Veröffentlichungstag der Anmeldung:
**30.12.81 Patentblatt 81/52**

(84) Benannte Vertragsstaaten:
**BE CH DE FR GB IT LI NL SE**

(71) Anmelder: **BAYER AG**
**Zentralbereich Patente, Marken und Lizenzen**
**D-5090 Leverkusen 1, Bayerwerk(DE)**

(72) Erfinder: **Becker, Wolf, Dr.**
**An den Buchen 30**
**D-5000 Köln 80(DE)**

(54) **Katalysatormasse, Verfahren zu ihrer Herstellung und ihre Verwendung für das Schwefelsäurekontaktverfahren im Fliessbett.**

(57) Das Trägermaterial, auf der Basis von Kieselsäurefüllstoffen und Tonmineralien, enthält nicht mehr als 4% $Al_2O_3$ und wird mit einer schwach schwefelsauren Lösung von Vanadyloxisulfat, in der das Vanadium in der Oxidationsstufe + IV vorliegt und Kaliumhydrogensulfat getränkt, die Härtung des Trägermaterials erfolgt bei Temperaturen unterhalb 600°C.

EP 0 042 532 A1

0042532

BAYER AKTIENGESELLSCHAFT    5090 Leverkusen, Bayerwerk
Zentralbereich
Patente, Marken und Lizenzen    Je/Bc

Katalysatormasse, Verfahren zu ihrer Herstellung und
ihre Verwendung für das Schwefelsäurekontaktverfahren
im Fließbett

---

Die vorliegende Erfindung betrifft eine Katalysatormasse für die Oxydation von Schwefeldioxid zu Schwefeltrioxid im Fließbett und ein Verfahren zu ihrer Herstellung.

Ein für das Fließbettverfahren geeigneter Katalysator
soll bei angenährter Kugelgestalt neben extrem hoher
mechanischer Festigkeit - insbesondere Abriebfestigkeit -
eine möglichst große wirksame Oberfläche pro Volumeneinheit aufweisen, aufgrund seiner Porenstruktur eine
rasche Gasdiffusion von der Oberfläche des Katalysatorkorns in das Innere gestatten und möglichst wenig Substanzen enthalten, die die Reaktionsgeschwindigkeit
herabsetzen. Korndurchmesser, Korngrößenverteilung und
Porenradienverteilung sollen dabei auf den jeweiligen
Prozeß abgestimmt sein.

Aus der DE-PS 1 926 564 sind abriebfeste Fließbettkatalysatoren für die Schwefelsäureherstellung bekannt,
deren Trägermaterial auf Basis gefällter Kieselsäuren
unter Mitverwendung von Tonmineralien hergestellt werden. Diese Trägermaterialien werden durch Suspendieren

Le A 20 079-Ausland

von Kieselsäurefüllstoffen und Tonmineralien unter Zusatz von Magnesiumoxid in einem wäßrigen stabilen Kieselsol hergestellt. Die gelierfähige Mischung wird in einer mit Wasser nicht mischbaren Flüssigkeit zu Tropfen der gewünschten Größe verteilt. Die erstarrten Gelkugeln werden von der organischen Flüssigkeit abgetrennt, und nach dem Trocknen und Kalzinieren bei Temperaturen von 500°C bis 1000°C geglüht. Nach der Kalzination erfolgt eine Säurebehandlung, um das in dem Trägermaterial vorhandene Aluminium möglichst weitgehend zu entfernen. Das so erhaltene Trägermaterial wird dann in üblicher Weise mit alkalischen Vanadatlösungen getränkt, wobei ein Überschuß an Alkali, bevorzugt Kalium mit einem Molverhältnis von Alkalioxid zu Vanadinpentoxid von ca. 1,5 zu 1 oder höher verwendet wird.

Es wurde nun gefunden, daß wesentlich verbesserte Katalysatoren erhalten werden können, wenn bei deren Herstellung auf Basis gefällter Kieselsäure nur so viel Tonmineralien zugesetzt werden, daß der trockene Katalysatorträger maximal 4 % $Al_2O_3$ , vorzugsweise nicht mehr als 2 % $Al_2O_3$ enthält und die Kalzination bei Temperaturen von nicht mehr als 600°C, vorzugsweise bei 200° bis 500°C erfolgt. Dieses Trägermaterial wird dann anschließend ohne vorherige Säurebehandlung mit einer schwach schwefelsauren Lösung von Vanadyloxysulfat getränkt und anschließend getrocknet. Bei diesem Trocknungsprozeß sind Temperaturen von 150° bis 250°C ausreichend. Auf jeden Fall sollen Temperaturbehandlungen des Trägers wie auch des fertigen Kontaktes unterbleiben,

Le A 20 079

die das im Kristallgitter der Tonmineralien enthaltene Aluminium in eine reaktive Form überführen.

Es ist auch möglich beide Temperaturbehandlungen in einem Schritt zu vereinen, dergestalt, daß das Trägermaterial vor der Tränkung lediglich getrocknet wird und die Härtung dann an dem fertigen Kontakt bei Temperaturen von unter 600°C, bevorzugt bei Temperaturen von 200° bis 500°C erfolgt.

Gegenstand der vorliegenden Erfindung ist daher ein Verfahren für die Herstellung von Fließbettkatalysatoren für die Oxydation von Schwefeldioxid zu Schwefeltrioxid auf der Basis von Kieselsäurefüllstoffen und Tonmineralien, welches dadurch gekennzeichnet ist, daß das Trägermaterial, das nicht mehr als 4 % $Al_2O_3$ , vorzugsweise nicht mehr als 2% $Al_2O_3$ auf Basis trockenen Trägermaterials enthält, mit einer schwach schwefelsauren Lösung von Vanadyloxysulfat, in der das Vanadium in der Oxydationstufe + IV vorliegt und Kaliumhydrogensulfat getränkt und die Härtung des Trägermaterials, bzw. des fertigen Kontaktes bei Temperaturen von nicht über 600°C, vorzugsweise bei 200° bis 500°C erfolgt.

Es werden Katalysatormassen erhalten, die sich sowohl durch ihre hohe Abriebfestigkeit als auch durch ihre gleichbleibende hohe Aktivität bei langzeitigem Gebrauch auszeichnen.

Die Herstellung der Trägermasse kann sowohl nach dem

- 4 -

Verfahren der DE-PS 1 926 564 als auch nach anderen
bekannten Granulierverfahren wie z.B. auf dem Granulierteller erfolgen. Es werden gefällte Kieselsäurefüllstoffe mit einer spezifischen Oberfläche nach BET von
40 bis 80 m$^2$/g verwendet, die vorzugsweise etwa 5 bis
10 Gew.-% Kalziumoxid enthalten. Die Füllstoffmenge wird
so bemessen, daß in dem Trägermaterial bezogen auf
wasserfreies Granulat etwa 20 bis 60 Gew.-%, vorzugsweise 35 bis 50 Gew.-% Füllstoff vorhanden sind. Dieser
Füllstoff wird in einem wäßrigen stabilen Kieselsäuresol
mit einer spezifischen Oberfläche von 150 bis 450 m$^2$/g
nach BET vermischt, wobei die Gelierung in bekannter
Weise unter Zugabe von kleinen Mengen an hochaktiven
Magnesiumoxid erfolgt. Bevorzugt wird hydratisiertes
Magnesiumoxid in Mengen von etwa 0,1 bis 3 Gew.-%. Beim
Suspendieren des Füllstoffes im Kieselsol oder bei der
Granulierung werden Tonmineralien in Mengen von ca. 10
bis 15 Gew.-% zugesetzt. Als Tonmineralien eignen sich
z.B. Kaolinit, Montmorillonit, Attapulgit, Bentonit
und/oder Kaolin.

Die Granulate werden getrocknet und anschließend
entweder bei Temperaturen von nicht oberhalb 600°C, vorzugsweise bei 200° bis 500°C gehärtet oder nach der
Trocknung unmittelbar der Tränkung zugeführt.

Die Tränkung erfolgt mit einer schwefelsauren Lösung von
Vanadyloxysulfat, die vorzugsweise nicht über 6 Gew.-%
besonders bevorzugt 0,1 bis 3 Gew.-% freie Schwefelsäure enthält. Die Tränklösung enthält Vanadyloxysulfat,

Le A 20 079

bei dem das Vanadium in der Oxydationsstufe + IV vorliegt, in Mengen von 5 bis 30 Gew.-%, vorzugsweise von 12 bis 23 Gew.-% und 15 bis 40, vorzugsweise 20 bis 30 Gew.-% Kaliumhydrogensulfat, jeweils bezogen auf die gesamte Lösung. Diese Lösungen lassen sich stark übersättigen, so daß sie so wohl kalt als auch warm auf das Trägermaterial aufgebracht werden können.

Die Konzentrationen von Vanadium und Kalium in der sauren Lösung sind so zu wählen, daß im getrockneten Katalysator ein Molverhältnis von Kalium zu Vanadin von 3 zu 1 bis 2 zu 1 vorliegt und der Vanadingehalt, berechnet als Vanadinpentoxid 4 bis 9, vorzugsweise 5 bis 7 Gew.-% beträgt.

Als Salze des vierwertigen Vanadium werden Vanadylsalze, vorzugsweise Sulfate, eingesetzt. Für die erfindungsgemäß bevorzugte Herstellung der Tränkelösung in einem einzigen Schritt wird die benötigte Wassermenge vorgelegt, die für die Reduktion und für die Bisulfatzubereitung benötigte Säuremenge zugegeben, anschließend die berechnete Menge Vanadinpentoxid suspendiert und die Lösung daraufhin mit Schwefeldioxid oder schwefeldioxidhaltigem Gas so lange reduziert, bis sämtliches Vanadinpentoxid als Vanadylsulfat ($VOSO_4$) gelöst vorliegt. Anschließend wird bei einer Temperatur von mindestens 40°C, vorzugsweise von 60° bis 90°C, Kaliumsulfat in die saure Lösung eingetragen. Nach beendeter Bisulfatbildung liegt nur ein geringer Schwefelsäureüberschuß vor. Diese Lösung kann sofort zum Tränken des Trägermaterials verwendet werden.

Le A 20 079

Bevorzugt erfolgt das Tränken im Fließbett. Das Material wird mit einer ausreichenden Fluidisierungsgeschwindigkeit fluidisiert und dann mit der Tränkelösung besprüht. Anschließend erfolgt vorzugsweise eine Nachbehandlung mit warmer Luft (150° bis 300°C) bis das Material keine Feuchtigkeit mehr abgibt.

Insbesondere wenn das Trägermaterial vor dem Tränkprozeß bei Temperaturen bis 600°C, vorzugsweise bei Temperaturen um 400°C gehärtet wurde, kann es unmittelbar ohne reduzierende Vorbehandlung im Fließbettkontakt für die Oxydation von $SO_2$ zu $SO_3$ verwendet werden. Es zeigt bei den üblichen Betriebstemperaturen von etwa 380° bis 500°C eine wesentlich höhere Aktivität als andere Fließbettkatalysatoren und weist auch nach mehrjährigem Betrieb noch eine hohe Abriebfestigkeit und eine unveränderte Aktivität.

Erfolgt die Härtung nicht vor der Tränkung, kann diese Härtung auch im Anschluß an die Tränkung erfolgen. Mit dem neuen Katalysatormaterial wurden z.B. bei einer Betriebstemperatur des Fließbettes von ca. 470°C und einem Gas, welches 12 Volumenprozent Schwefeldioxid enthielt, in einer einzigen Fließbettstufe ein Umsatz von über 93 % von Schwefeldioxid zu Schwefeltrioxid erreicht.

Die vorliegende Erfindung soll durch die nachfolgenden Beispiele noch weiter erläutert werden:

Le A 20 079

**Beispiel 1**

**Herstellung des Trägermaterials**

In 10 l wäßrigen Kieselsäuresol (Dichte 1,20 g/ml, 30 Gew.-% $SiO_2$) mit einer spezifischen Oberfläche nach BET von 200 $m^2$/g wurden mit Hilfe eines Intensivmischers 3410 g eines aus Natrium-Wasserglas mit Calciumchlorid und wäßriger Salzsäure gefällten Kieselsäurefüllstoffes und 520 g Kaolin suspendiert. Der Kieselsäurefüllstoff hatte eine spezifische Oberfläche von 50 $m^2$/g nach BET und bestand zu 75 % aus $SiO_2$ , 8 % CaO und 17 % freiem und gebundenem Wasser. Der Kaolin bestand zu 47 % aus $SiO_2$ , 38 % $Al_2O_3$ und 15 % Wasser sowie Spuren anderer Oxide. Nach der chemischen Zusammensetzung bezogen auf Feststoff ergab sich folgende berechnete Zusammensetzung:

etwa 93 Gew.-% $SiO_2$
etwa 3 Gew.-% $Al_2O_3$
etwa 4 Gew.-% CaO

Durch Dosierpumpen wurden Mengen von 10 l/Std. der genannten Suspension und 1,2 l/Std. einer wäßrigen Magnesiumoxidsuspension mit einem Gehalt von 80 g MgO/l kontinuierlich einem Mischgefäß zugeführt, von dem das gelierfähige Gemisch der beiden Suspensionen auf eine rotierende Verteilervorrichtung auflief. Unterhalb der Verteilervorrichtung befand sich eine mit o-Dichlorbenzol gefüllte Säule.

Beim Eintritt in das organische Medium zerteilen sich die Strahlen der Suspension zu kugelförmigen Tropfen,

Le A 20 079

die sich während des Absinkens durch die einsetzende Gelierung verfestigten.

Das noch verformbare Granulat wurde vom o-Dichlorbenzol abgetrennt, im Luftstrom getrocknet und danach 2 Stunden auf 430°C erhitzt. Es wurde ein perlförmiges, sehr hartes Material mit Korndurchmessern von 0,4 bis 2 mm erhalten. Seine spezifische Oberfläche nach BET betrug 124 $m^2$/g. sein Porenvolumen 501 $mm^3$/g. sein Abriebverlust nach der dynamischen Testmethode 1 Gewichtsprozent.

Le A 20 079

- 9 -

<u>Beispiel 2</u>

<u>Herstellung der Tränkelösung</u>

In einem emaillierten Rührkessel mit 3 m$^3$ Inhalt wurden 500 Liter entsalztes Wasser eingefüllt. Anschließend wurden 146 kg Vanadinpentoxid mit 350 Liter Wasser in den Kessel eingeschlämmt. Unter Rühren wurden 208,5 g 96 %ige chemisch reine Schwefelsäure zugesetzt. Hierauf wurde ca. 60 bis 90 Minuten lang (150 bis 200 m$^3$/Stunde) unter Rühren ein Schwefelverbrennungsgas mit einem Gehalt zwischen 16 bis 19 Volumenprozent Schwefeldioxid eingeleitet. Die Lösung erwärmte sich hierbei bis auf ca.60$^o$C. Das Einleiten wurde beendet als die tiefblaue Lösung klar war. Anschließend wurden über einen Trichter 280 g Kaliumsulfat unter Rühren in den Kessel gegeben und bei ca. 60 bis 80$^o$C gerührt, bis die Lösung wieder klar war. Diese Lösung wurde jetzt auf das Trägermaterial aufgebracht.

<u>Beispiel 3</u>

<u>Herstellung des Katalysators</u>

In einem Fließbettreaktor wurden 1,4 t Wirbelkatalysatorträger (nach Beispiel 1 hergestellt) vorgelegt und mit kalter Luft mit der ca. 2- bis 3-fachen Fluidisierungsgeschwindigkeit fluidisiert. Über einen Brausekopf wurde die nach Beispiel 1 hergestellte Lösung ( ca. 950 Liter) auf das Fließbett während ca. 2 Stunden aufgesprüht. Anschließend wurde mit ca. 200$^o$C warmer Luft das Fluidisieren fortgesetzt, bis das Material keine Feuchtigkeit mehr abgab. Nach dem Abkühlen wurden ca. 2000 kg sofort

<u>Le A 20 079</u>

einsatzbereiter Katalysator erhalten. Dieses
Material konnte direkt im Katalysereaktor eingesetzt
werden und nach dem Aufheizen auf die Anspringtemperatur
direkt mit dem Maximaldurchsatz der Betriebsanlage
beaufschlagt werden. Eine Analyse des Reaktormaterials
ergab 6,5 Gew.-% Vanadinpentoxid und 6,7 Gew.-% Kaliumoxid. Selbstverständlich kann das Aufbringen der Tränkelösung auch mit anderen gängigen Verfahren erfolgen.

Patentansprüche

1. Verfahren für die Herstellung von Fließbettkatalysatoren für die Oxydation von Schwefeldioxid zu Schwefeltrioxid auf der Basis von Kieselsäurefüllstoffen und Tonmineralien, dadurch gekennzeichnet, daß das Trägermaterial, das nicht mehr als 4 % $Al_2O_3$, vorzugsweise nicht mehr als 2 % $Al_2O_3$ auf Basis trockenen Trägermaterials enthält, mit einer schwach schwefelsauren Lösung von Vanadyloxysulfat, in der das Vanadium in der Oxydationsstufe + IV vorliegt und Kaliumhydrogensulfat getränkt und die Härtung des Trägermaterials, bzw. des fertigen Kontaktes bei Temperaturen von nicht über 600°C, vorzugsweise bei 200° bis 400°C erfolgt.

2. Verfahren nach Anspruch 1, dadurch gekennzeichnet, daß die Konzentrationen an Vanadium und Kalium in der schwefelsauren Lösung so eingestellt werden, daß im fertigen, getrockneten Katalysator ein Molverhältnis von Kalium zu Vanadin von 3:1 bis 2:1 vorliegt.

3. Verfahren nach Anspruch 1 oder 2, dadurch gekennzeichnet, daß das Trägermaterial mit einer schwefelsauren Lösung von einem solchen Vanadingehalt getränkt wird, daß der Vanadingehalt des getrockneten Katalysators 4 bis 9 Gewichtsprozent, vorzugsweise 5,0 bis 7,0 Gewichtsprozent, berechnet als Vanadinpentoxid, beträgt.

Le A 20 079

4.  Verfahren nach einem oder mehreren der Ansprüche
    1 bis 3, dadurch gekennzeichnet, daß als Vanadyl-
    salze Salze des vierwertigen Vanadins verwendet
    werden.

5.  Verfahren nach einem oder mehreren der Ansprüche
    1 bis 4, dadurch gekennzeichnet, daß zu der Tränkelösung so viel Schwefelsäure zugesetzt wird, daß
    diese in der Lösung mit 0,1 bis 6 Gew.-% enthalten
    ist.

6.  Verfahren nach einem oder mehreren der Ansprüche
    1 bis 5, dadurch gekennzeichnet, daß die Tränkung
    im Fließbett durchgeführt wird.

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | <u>GB - A - 1 270 224</u> (INST. KATALIZA SIBIRSKOGO OTDELENIA)<br><br>* Seite 2, Zeilen 85-118 *<br><br>-- | 1-4 | C 01 B 17/79<br>17/77<br>B 01 J 23/22<br>37/00 |
| | <u>FR - A - 1 112 470</u> (IMPERIAL CHEMICAL INDUSTRIES)<br><br>* Seite 2, linke Spalte, Absätze 1,2,7; Seite 4, Beispiel 2 *<br><br>& DE - B - 1 023 020<br><br>-- | 1,3,4 | |
| | <u>GB - A - 334 268</u> (IMPERIAL CHEMICAL INDUSTRIES)<br><br>* Seite 2, Zeilen 105-112; Seite 3, Zeilen 1-29, 50-57 *<br><br>-- | 1,4 | RECHERCHIERTE SACHGEBIETE (Int. Cl.³)<br><br>C 01 B 17/79<br>17/77<br>B 01 J 23/22<br>37/00 |
| | <u>US - A - 4 184 980</u> (SHERIF & SMITH)<br><br>* Spalte 5, Zeilen 44-62; Spalte 3, Zeilen 3-10; Spalte 2, Zeilen 42-53 *<br><br>-- | 1 | |
| DA | <u>DE - A - 1 926 564</u> (BAYER)<br><br>---- | | KATEGORIE DER GENANNTEN DOKUMENTE<br><br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 08-09-1981 | KERRES |

EPA form 1503.1 06.78